# EUROPÄISCHE PATENTSCHRIFT

(11) **EP 2 868 888 B1**
(45) Veröffentlichungstag und Bekanntmachung des Hinweises auf die Patenterteilung: **21.12.2016**
(21) Anmeldenummer: 14187749.8
(22) Anmeldetag: 06.10.2014
(51) Int. Cl.: F01N 13/08, F01N 13/18, F16L 13/08, F16L 13/14

(54) **Verbindung von Leitungselementen**
Connection of conduit elements
Liaison d'éléments conducteurs

(30) Priorität: 31.10.2013 DE 202013104875 U
(43) Veröffentlichungstag der Anmeldung: 06.05.2015
(73) Patentinhaber: Witzenmann GmbH, 75175 Pforzheim (DE)
(72) Erfinder: Pluschke, Michael, 75305 Neuenbürg (DE)
(74) Vertreter: Lemcke, Brommer & Partner Patentanwälte Partnerschaft mbB

(56) Entgegenhaltungen:
- WO-A1-2009/056213
- DE-A1-102004 038 099
- DE-A1-102009 059 686
- DE-A1-102011 106 801
- DE-A1-102012 000 439
- US-A- 5 813 438

## Beschreibung

Die Erfindung betrifft eine Verbindung zwischen zwei konzentrisch angeordneten Leitungselementen nach dem Oberbegriff des Anspruchs 1, insbesondere für ein Entkoppelelement für die Abgasanlage eines Kraftfahrzeugs mit Verbrennungsmotor.

Außerdem betrifft die Erfindung ein Entkoppelelement nach dem Oberbegriff des Anspruchs 12 für die Abgasanlage eines Kraftfahrzeugs mit Verbrennungsmotor sowie mit Anspruch 13 eine Weiterbildung des Abgasleitungselements gemäß WO 2009/056213 A1.

Insbesondere die zuletzt genannte WO-Offenlegungsschrift zeigt ein Entkoppelelement für die Abgasanlage eines Kraftfahrzeugs mit Verbrennungsmotor, welches ein Außenrohr und ein Innenrohr aufweist, wobei das Außenrohr zwei beabstandete Wellerohrabschnitte umfasst und das Innenrohr als Agraff- oder Wickelschlauch ausgebildet ist. Bei solchen Abgasleitungselementen - jedoch ohne Beschränkung hierauf - ist es regelmäßig erforderlich, das Außenrohr und das Innenrohr in einem mittleren Bereich der Anordnung zwischen zwei Wellrohrabschnitten des Außenrohrs miteinander zu verbinden.

Nach dem Stand der Technik wird diese Verbindung mittels Form- und Kraftschluss durch mechanisches Verpressen ausgeführt. Dabei hat sich allerdings als nachteilig erwiesen, dass bei entsprechender Beanspruchung, zum Beispiel bei Temperaturwechsel oder Zug-Biege-Belastungen, sich die Anbindung lösen kann, so dass anschließend Relativbewegungen zwischen Innenrohr (Wickelschlauch oder Liner) und Außenrohr (Glattrohrzylinder) stattfinden können. Dies kann durch lokalen Reibverschleiß zu einem vorzeitigen Ausfall des Entkoppelelements führen.

Darüber hinaus ist es zur Realisierung der bekannten Anbindung erforderlich, sowohl das Innenrohr (Liner) als auch das Außenrohr (Glattrohrzylinder) in dem genannten mittleren Bereich zwischen zwei Wellrohrabschnitten (Balgpaketen) aufzuweiten und dadurch zu verpressen. Dabei hat sich zusätzlich als nachteilig erwiesen, dass durch die beschriebene Aufweitung die Beweglichkeit des Innen-rohrs (Linerbeweglichkeit) beeinträchtigt wird.

Es ist weiterhin aus dem Stand der Technik bekannt, dass zwischen dem Innenrohr und dem Außenrohr ein Lotmittel angeordnet ist, welches die beiden Rohre stoffschlüssig miteinander verbindet. Eine derartige Verbindung ist aus der DE 10 2009 059 686 A1, der DE 10 2011 106 801 A1, der US 5,813,438, der DE 10 2004 038 099 A1 sowie der DE 10 2012 000 439 bekannt. Die in diesen Druckschriften offenbarten Verbindungen weisen jedoch den Nachteil auf, dass das Lotmittel in axialer Richtung der Leitungselementenanordnung nicht oder nur ungenügend definiert positioniert werden kann.

Der Erfindung liegt die Aufgabe zugrunde, unter Vermeidung der vorstehend aufgeführten Nachteile eine Lösung anzugeben, welche die Verbindung eines ersten, inneren Leitungselements (Innenrohr) mit einem zweiten, äußeren Leitungselement (Außenrohr) ermöglicht, weiche Verbindung derart sicher ausgebildet sein soll, dass keine Relativbewegung zwischen den genannten Leitungselementen in dem verbundenen Bereich stattfinden kann, und wobei weiterhin eine Linerbeweglichkeit gegebenenfalls nicht beeinträchtigt werden soll.

Die Aufgabe wird erfindungsgemäß gelöst durch eine Verbindung mit den Merkmalen des Anspruchs 1, durch ein Entkoppelelement mit den Merkmalen des Anspruchs 10 und durch ein Abgasleitungselement mit den Merkmalen des Anspruchs 11.

Vorteilhafte Weiterbildungen der Erfindung sind Gegenstand von Unteransprüchen, welche die grundlegende erfinderische Idee in vorteilhafter Weise weiterbilden.

Erfindungsgemäß ist eine Verbindung zwischen zwei konzentrisch angeordneten Leitungselementen, insbesondere für ein Entkoppelelement für die Abgasanlage eines Kraftfahrzeugs mit Verbrennungsmotor, dadurch gekennzeichnet, dass an dem inneren Leitungselement und an dem äußeren Leitungselement jeweils eine Formschlussstruktur vorgesehen ist, durch die das Lotmittel in axialer Richtung der Leitungselementenanordnung positioniert ist.

Die erfindungsgemäße Verbindung ersetzt die bislang nach dem Stand der Technik praktizierte Anbindung durch Verpressung mittels Aufweitung des ersten Leitungselements (Liner) und des zweiten Leitungselements (Glattrohr), so dass ein Lösen der Verbindung sicher ausgeschlossen ist und keine Relativbewegungen zwischen den Leitungselementen stattfinden können. Dies vermeidet lokalen Reibverschleiß und damit einen vorzeitigen Ausfall des Entkoppelelements (EKE).

Da außerdem die bisher praktizierte Aufweitung insbesondere eines als Liner ausgebildeten inneren Rohrleitungselements entfällt, lässt sich eine Reduzierung der Linerbeweglichkeit vermeiden.

Es ist erfindungsgemäß vorgesehen, dass an dem inneren Leitungselement und an dem äußeren Leitungselement jeweils eine Formschlussstruktur vorgesehen ist, um das Lotmittel in axialer Richtung der Leitungselementenanordnung zu positionieren.

Während eine solche Formschlussstruktur grundsätzlich auch während des bereits angesprochenen leichten Verpressens der zu verbindenden Leitungselemente geschaffen werden kann, ist erfindungsgemäß eine solche Formschlussstruktur, vorzugsweise eine lokale Querschnittsvergrößerung des äußeren Leitungselements, bereits vor Aufbringen des Lotmittels (der Lotpaste) vorhanden und dient so zum definierten Aufbringen des Lotmittels. Beispielsweise kann das Lotmittel im Bereich einer Innenseite der Querschnittsvergrößerung an dem äußeren Leitungselement aufgebracht werden.

Eine erste Weiterbildung der erfindungsgemäßen Verbindung sieht vor, dass das Lotmittel eine Paste ist, die vorzugsweise vor dem konzentrischen Anordnen A der beiden Leitungselemente in einem Bereich auf das Innere und/oder das äußere Leitungselement aufgebracht wird. Im Anschluss daran kann vorgesehen sein, dass die geschaffene Leitungselementenanordnung aus erstem Leitungselement und zweitem Leitungselement in dem Bereich induktiv erwärmt wird, um die angestrebte Lotverbindung zu schaffen. Als entsprechende Weiterbildung der erfindungsgemäßen Verbindung ist vorgesehen, dass die stoffschlüssige Verbindung zwischen den beiden Leitungselementen durch induktive Erwärmung geschaffen ist. Die Erfindung ist jedoch nicht auf die genannte Art der Erwärmung beschränkt, sondern jedes andere gängige Lötverfahren kann alternativ eingesetzt werden.

Eine wieder andere Weiterbildung der erfindungsgemäßen Verbindung sieht vor, das vor Schaffung der stoffschlüssigen Verbindung (Lötverbindung) ein leichtes Verpressen der zu verbindenden Leitungselemente vorgenommen wird bzw. wurde. Dies fördert die Verbindungssicherheit im Bereich der angestrebten Lötverbindung.

Im Zuge einer wieder anderen Weiterbildung der erfindungsgemäßen Verbindung kann vorgesehen sein, dass das Lotmittel an einer Verbindungsstelle zwischen den beiden Leitungselementen über den gesamten Umfang der Leitungselementenanordnung aufgebracht wurde, vorzugsweise über den Außenumfang des inneren Leitungselements und/oder über den Innenumfang des äußeren Leitungselements.

Eine noch andere Weiterbildung der erfindungsgemäßen Verbindung sieht vor, dass wenigstens eines der beiden Leitungselemente, vorzugsweise das äußere Leitungselement, als Rohrleitungselement oder Glattrohr ausgebildet.

Weiterhin kann vorgesehen sein, dass wenigstens eines der beiden Leitungselemente, vorzugsweise das innere Leitungselement, als Wickelschlauch (Agraffschlauch) oder Liner ausgebildet ist.

Die Erfindung ist jedoch keinesfalls auf die vorstehend beschriebene Kombination verschiedener Leitungselemente beschränkt. Es liegt im Rahmen der Erfindung, beide Leitungselemente als (glatte) Rohrleitungselemente oder als Wickelschläuche auszubilden. Außerdem kann die Anordnung der verwendeten Leitungselemente gegenüber der vorstehend beschriebenen Anordnung vertauscht sein.

Gemäß einem anderen Aspekt der Erfindung weist ein Entkoppelelement für die Abgasanlage eines Kraftfahrzeugs mit Verbrennungsmotor eine erfindungsgemäße Verbindung auf.

Gemäß einem wieder anderen Aspekt der Erfindung weist ein Abgasleitungselement mit einem Außenrohr, welches Außenrohr zwei Wellrohrabschnitte und einen glatt ausgeführten mittleren Bereich aufweist, und mit einem koaxial zu dem Außenrohr angeordneten Innenrohr, eine erfindungsgemäße Verbindung zwischen Außenrohr und Innenrohr auf, vorzugsweise in einem mittleren Bereich des Abgasleitungselements zwischen zwei Wellrohrabschnitten des Außenrohrs.

Weitere Eigenschaften und Vorteile der Erfindung ergeben sich aus der nachfolgenden Beschreibung eines Ausführungsbeispiels anhand der Zeichnung.

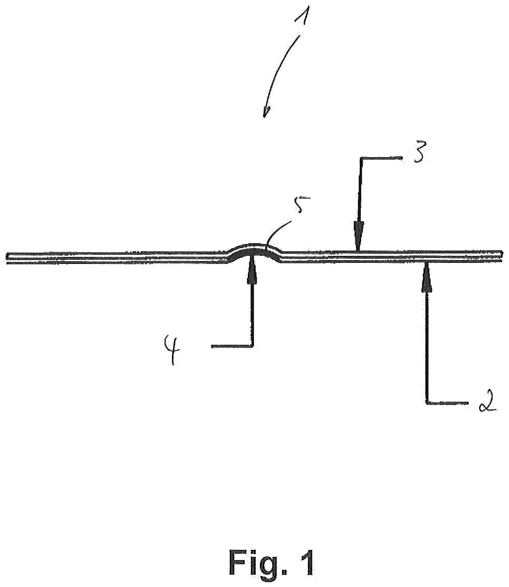

Figur 1 zeigt teilweise und im Längsschnitt eine mögliche Ausgestaltung der erfindungsgemäßen Verbindung.

In Figur 1 ist ein Ausschnitt einer Leitungselementenanordnung im Längsschnitt gezeigt, welcher Leitungselementenanordnung insgesamt mit dem Bezugszeichen 1 bezeichnet ist. Die Leitungselementenanordnung 1 umfasst ein erstes, inneres Leitungselement 2 und ein zweites, äußeres Leitungselement 3. Das innere Leitungselement 2 ist ohne Beschränkung als Wickelschlauch ausgebildet, während das äußere Leitungselement 3 als Glattrohr ausgebildet ist. In einem Bereich 4 sind das innere Leitungselement 2 und das äußere Leitungselement 3 mittels einer Lotverbindung 5 stoffschlüssig miteinander verbunden. In dem genannten Bereich 4 weist sowohl das innere Leitungselement 2 als auch das äußere Leitungselement 3 eine lokale Querschnittsvergrößerung in Form einer umlaufenden Auswölbung auf, wobei die Querschnittsvergrößerung des inneren Leitungselements 2 und die Querschnittsvergrößerung des äußeren Leitungselements 3 formschlüssig-komplementär ausgebildet sind.

Es liegt im Rahmen der Erfindung, das innere Leitungselement 2 und das äußere Leitungselement 3 vor dem Verbinden mit der genannten Querschnittsvergrößerung zu versehen und anschließend im Bereich der genannten Querschnittsvergrößerungen zu verbinden. Es liegt jedoch auch im Rahmen der Erfindung, die gezeigten Querschnittsvergrößerungen des inneren 2 bzw. äußeren Leitungselements 3 durch gemeinsames Verpressen der beiden Leitungselemente 2, 3 nachträglich auszuprägen.

Im erstgenannten Fall ist es besonders vorteilhaft, wenn das zur Erzeugung der Lotverbindung 5 verwendete Lotmittel (Lotpaste) im Bereich der genannten Querschnittsvergrößerungen aufgebracht wird, vorteilhafter Weise an der Innenseite der Querschnittsvergrößerung des äußeren Leitungselements 3, wodurch sich eine definierte Positionierung des Lotmittels in axialer Richtung ergibt.

Im zweitgenannten Fall erfolgt (das gegenüber dem Stand der Technik nur leichte) Verpressen der Leitungselemente 2, 3 gerade im Auftragebereich des Lotmittels.

Vorzugsweise erfolgt die Schaffung der Lotverbindung 5 im Bereich 4 durch induktives Erwärmen in dem genannten Bereich. Allerdings ist die Erfindung hierauf nicht beschränkt, und es können andere, geeignete Lötverfahren Anwendung finden.

Vorzugsweise wird die vorstehend beschriebene Verbindung zwischen dem inneren Leitungselement (Innenrohr) und dem äußeren Leitungselement (Außenrohr) beim Gegenstand der WO 2009/056213 A1 verwendet, um das dort beispielsweise in Figur 1 dargestellte Innenrohr mit dem Außenrohr zu verbinden, vorzugsweise in einem mittleren Bereich zwischen zwei Wellrohrabschnitten des Außenrohrs.

Die Erfindung eignet sich jedoch auch zur Herstellung weiterer Entkoppelelemente für die Abgasanlage eines Kraftfahrzeugs mit Verbrennungsmotor, bei denen ein inneres Leitungselement mit einem äußeren Leitungselement zu verbinden ist.

## Patentansprüche

1. Verbindung zwischen zwei konzentrisch angeordneten Leitungselementen (2, 3) zu einer Leitungselementenanordnung (1), insbesondere für ein Entkoppelelement für die Abgasanlage eines Kraftfahrzeugs mit Verbrennungsmotor, mit einem Lotmittel, das zwischen einem ersten, inneren (2) der zwei Leitungselemente und einem zweiten, äußeren (3) der zwei Leitungselemente angeordnet ist, welches Lotmittel eine stoffschlüssige Verbindung (5) zwischen den beiden Leitungselementen (2, 3) schafft,
**dadurch gekennzeichnet, dass**
an dem inneren Leitungselement (2) und an dem äußeren Leitungselement (3) jeweils eine Formschlussstruktur vorgesehen ist, durch die das Lotmittel in einer axialen Richtung der Leitungselementenanordnung (1) positioniert ist.

2. Verbindung nach Anspruch 1,
**dadurch gekennzeichnet, dass**
das Lotmittel eine Lotpaste ist.

3. Verbindung nach Anspruch 1 oder 2,
**dadurch gekennzeichnet, dass**
die stoffschlüssige Verbindung (5) durch induktive Erwärmung geschaffen ist.

4. Verbindung nach einem der Ansprüche 1 bis 3,
**dadurch gekennzeichnet, dass**
vor Schaffung der stoffschlüssigen Verbindung (5) ein leichtes Verpressen der zu verbindenden Leitungselemente (2, 3) vorgenommen wurde.

5. Verbindung nach einem der Ansprüche 1 bis 4,
**dadurch gekennzeichnet, dass**
das Lotmittel an einer Verbindungsstelle über den gesamten Umfang der Leitungselementenanordnung (1) aufgebracht wurde.

6. Verbindung nach einem der Ansprüche 1 bis 5,
**dadurch gekennzeichnet, dass**
die Formschlussstruktur als lokale Querschnittsveränderung des betreffenden Leitungselements (2, 3) ausgebildet ist, vorzugsweise als Querschnittsvergrößerung des äußeren Leitungselements (3).

7. Verbindung nach einem der Ansprüche 1 bis 6,
**dadurch gekennzeichnet, dass**
das Lotmittel im Bereich der Formschlussstruktur aufgebracht wurde.

8. Verbindung nach einem der Ansprüche 1 bis 7,
**dadurch gekennzeichnet, dass**
wenigstens ein Leitungselement, vorzugsweise das äußere Leitungselement (3), als Rohrleitungselement ausgebildet ist.

9. Verbindung nach einem der Ansprüche 1 bis 8,
**dadurch gekennzeichnet, dass**
wenigstens ein Leitungselement, vorzugsweise das innere Leitungselement (2), als Wickelschlauch ausgebildet ist.

10. Entkoppelelement für die Abgasanlage eines Kraftfahrzeugs mit Verbrennungsmotor, mit einer Verbindung gemäß einem der vorangehenden Ansprüche.

11. Abgasleitungselement mit einem Außenrohr, welches Außenrohr zwei Wellrohrabschnitte und einen glatt ausgeführten mittleren Bereich aufweist, und einem koaxial zu dem Außenrohr angeordneten Innenrohr, und mit einer Verbindung gemäß einem der vorangehenden Ansprüche 1 bis 9 zwischen dem Außenrohr und dem Innenrohr, vorzugsweise in dem mittleren Bereich zwischen den zwei Wellrohrabschnitten des Außenrohrs.

## Claims

1. Connection between two concentrically arranged duct elements (2, 3) to form a duct element arrangement (1), especially for a decoupling element for the exhaust gas system of a motor vehicle having an internal combustion engine, having a soldering agent which is arranged between a first, inner (2) of the two duct elements and a second, outer (3) of the two duct elements, which soldering agent creates a material-bonded connection (5) between the two duct elements (2, 3),
**characterised in that**
on the inner duct element (2) and on the outer duct element (3) there is provided in each case an interlocking structure by means of which the soldering agent is positioned in an axial direction of the duct element arrangement (1).

2. Connection according to claim 1,
**characterised in that**
the soldering agent is a soldering paste.

3. Connection according to claim 1 or 2,
**characterised in that**
the material-bonded connection (5) has been created by inductive heating.

4. Connection according to any one of claims 1 to 3,
**characterised in that**
before creation of the material-bonded connection (5), gentle crimping of the duct elements (2, 3) to be connected has been carried out.

5. Connection according to any one of claims 1 to 4,
**characterised in that**
the soldering agent has been applied to a connection location over the entire circumference of the duct element arrangement (1).

6. Connection according to any one of claims 1 to 5,
**characterised in that**
the interlocking structure is in the form of a local change in cross-section of the duct element (2, 3) in question, preferably in the form of a cross-sectional enlargement of the outer duct element (3).

7. Connection according to any one of claims 1 to 6,
**characterised in that**
the soldering agent has been applied in the region of the interlocking structure.

8. Connection according to any one of claims 1 to 7,
**characterised in that**
at least one duct element, preferably the outer duct element (3), is in the form of a pipeline element.

9. Connection according to any one of claims 1 to 8,
**characterised in that**
at least one duct element, preferably the inner duct element (2), is in the form of a stripwound hose.

10. Decoupling element for the exhaust gas system of a motor vehicle having an internal combustion engine, having a connection in accordance with any one of the preceding claims.

11. Exhaust gas duct element having an outer pipe, which outer pipe has two corrugated pipe sections and a central region of smooth construction, and having an inner pipe arranged coaxially with respect to the outer pipe, and having a connection in accordance with any one of the preceding claims 1 to 9 between the outer pipe and the inner pipe, preferably in the central region between the two corrugated pipe sections of the outer pipe.

## Revendications

1. Liaison entre deux éléments de conduite (2, 3) disposés concentriquement en un agencement d'éléments de conduite (1), en particulier pour un élément de découplage pour le système d'échappement d'un véhicule automobile à moteur à combustion, avec un agent de brasage qui est disposé entre un premier élément intérieur (2) et un deuxième élément extérieur (3) des deux éléments de conduite, lequel agent de brasage crée une liaison par coopération de matières (5) entre les deux éléments de conduite (2, 3),
**caractérisée en ce**
**qu'**une structure de formes complémentaires est prévue respectivement sur l'élément de conduite intérieur (2) et sur l'élément de conduite extérieur (3), au moyen de laquelle l'agent de brasage est positionné dans une direction axiale de l'agencement d'éléments de conduite (1).

2. Liaison selon la revendication 1,
**caractérisée en ce**
**que** l'agent de brasage est une pâte à braser.

3. Liaison selon la revendication 1 ou la revendication 2,
**caractérisée en ce**
**que** la liaison par coopération de matières (5) est créée par chauffage par induction.

4. Liaison selon l'une des revendications 1 à 3,
**caractérisée en ce**
**qu'**avant de créer la liaison par coopération de matières (5), un léger pressage des éléments de conduite (2, 3) à relier a été effectué.

5. Liaison selon l'une des revendications 1 à 4,
**caractérisée en ce**
**que** l'agent de brasage a été appliqué sur une zone de liaison sur tout le pourtour de l'agencement d'éléments de conduite (1).

6. Liaison selon l'une des revendications 1 à 5,
**caractérisée en ce**
**que** la structure de formes complémentaires est réalisée sous la forme d'une modification locale de la section transversale de l'élément de conduite (2, 3) concerné, de préférence sous la forme d'un accroissement de la section transversale de l'élément de conduite extérieur (3).

7. Liaison selon l'une des revendications 1 à 6,
**caractérisée en ce**
**que** l'agent de brasage a été appliqué dans la zone de la structure de formes complémentaires.

8. Liaison selon l'une des revendications 1 à 7,
**caractérisée en ce**
**qu'**au moins un élément de conduite, de préférence l'élément de conduite extérieur (3), est réalisé sous la forme d'un élément de tuyauterie.

9. Liaison selon l'une des revendications 1 à 8,
**caractérisée en ce**
**qu'**au moins un élément de conduite, de préférence l'élément de conduite intérieur (2), est réalisé sous la forme d'un tuyau flexible spiralé.

10. Elément de découplage pour le système d'échappement d'un véhicule automobile à moteur à combustion, présentant une liaison selon l'une des revendications précédentes.

11. Elément de conduite de gaz d'échappement comprenant un tube extérieur, lequel tube extérieur présente deux portions de tube ondulé et une zone intermédiaire lisse, et un tube intérieur disposé coaxialement par rapport au tube extérieur, et présentant une liaison selon l'une des revendications précédentes 1 à 9 entre le tube extérieur et le tube intérieur, de préférence dans la zone intermédiaire entre les deux portions de tube ondulé du tube extérieur.
